# EUROPÄISCHE PATENTSCHRIFT

(11) **EP 2 871 756 B1**
(45) Veröffentlichungstag und Bekanntmachung des Hinweises auf die Patenterteilung: **13.11.2019**
(21) Anmeldenummer: 14002409.2
(22) Anmeldetag: 12.07.2014
(51) Int. Cl.: H02K 1/14, H02K 5/04, H02K 1/18, H02K 15/00, H02K 7/02, H02K 7/14, H02K 7/18, H02K 1/20, H02K 5/20, H02K 7/00

(54) **Kurbelwellen-Startergenerator und Gehäuse für einen Kurbelwellen-Startergenerator**
Crankshaft starter generator and housing for a crankshaft starter generator
Générateur de démarreur de vilebrequin et boîtier pour un tel générateur

(30) Priorität: 08.11.2013 DE 102013018720
(43) Veröffentlichungstag der Anmeldung: 13.05.2015
(73) Patentinhaber: MAN Truck & Bus SE, 80995 München (DE)
(72) Erfinder: Golka, Markus, 90402 Nürnberg (DE)
(74) Vertreter: v. Bezold & Partner Patentanwälte - PartG mbB

(56) Entgegenhaltungen:
- EP-A1- 1 885 046
- DE-A1-102012 003 386
- US-A- 6 133 702
- US-A1- 2002 036 434
- US-A1- 2002 121 817
- NN: "Autoelektrik", fahrzeugelektrik.de , 14. April 2013 (2013-04-14), XP002759014, Gefunden im Internet: URL:https://web.archive.org/web/2013041410 3656/http://www.fahrzeug-elektrik.de/Edg.h tm [gefunden am 2016-06-21]
- NN: "Classification of electric motors", electrical-knowhow.com , 8. Juli 2013 (2013-07-08), XP002759015, Gefunden im Internet: URL:https://web.archive.org/web/2013070812 3716/http://www.electrical-knowhow.com/201 2/05/classification-of-electric-motors.htm l [gefunden am 2016-06-21]

## Beschreibung

Die Erfindung betrifft einen Kurbelwellen-Startergenerator.

Um die erste Gemischbildung, Zündung und Verbrennung in einem Verbrennungsmotor zu ermöglichen, werden Verbrennungsmotoren durch eine äußere Kraftquelle auf eine vorgegebene Mindestdrehzahl gebracht. Hierfür sind verschiedene Anlasser bzw. Starter bekannt. Neben Zahnkranzanlasser sind im Stand der Technik auch Kurbelwellen-Startergeneratoren bekannt. Dies sind auf der Kurbelwelle sitzende elektrische Maschinen mit Starter- und Generatorfunktion und werden gemeinhin als Kurbelwellen-Startergeneratoren bezeichnet, wegen der direkten Anbindung ihres Rotors mit der Kurbelwelle der Brennkraftmaschine. Die elektrischen Kurbelwellen-Startergeneratoren haben den Vorteil, dass die Übertragung der mechanischen Starterenergie berührungslos und somit verschleißfrei und geräuscharm erfolgt.

Die Kurbelwellen-Startergeneratoren sind zwischen Motor und Getriebe angeordnet. Der KSG-Rotor ist mit dem auf dem getriebeseitigen Ende der Kurbelwelle angeordneten Schwungrad verbunden. Auf diese Weise steht er in Wirkverbindung mit der Kurbelwelle. Der KSG-Stator ist auf der Innenseite eines den Rotor umhausenden Gehäuses, nachfolgend auch als KSG-Gehäuse bezeichnet, ortsfest angeordnet. Der Rotor bzw. der Rotorträger ist mit einem abtriebsseitigen Getriebe über ein Adapterelement, beispielsweise einer sogenannten Flexplatte, verbunden. Diese Verbindung erfolgt typischerweise durch Verschrauben des Adapterelements mit dem Getriebe.

Diese Anordnung hat den Nachteil, dass die Verschraubungsstellen zwischen Getriebe und Adapterelement, z. B. der Flexplatte, bei einem Getriebeschaden oder einem anderen Service-Fall, schwer zugänglich sind, da diese vom Kurbelwellen-Startergenerator verdeckt werden und der beschränkte Bauraum zwischen Motor und Getriebe die Werkzeugzugänglichkeit erschwert, vor allem im Service-Fall, wenn der Motor, das Getriebe und der Kurbelwellenstarter-Generator noch im Fahrzeug verbaut sind. Bei Vorsehen eines Kurbelwellen-Startergenerators zwischen einem Getriebe und dem Motor ist es zur Demontage des Getriebes daher bislang erforderlich, erst die Triebstranganordnung aus Motorschwungrad, Schwungradgehäuse und Kurbelwellen-Startergenerator zu demontieren, um an die Verschraubung zwischen Adapterelement und Getriebe zu gelangen, um das Getriebe demontieren zu können.

Aus dem Dokument US 2002/036434 A1 ist ein Startergenerator bekannt mit einem Rotor, einem Stator und einem Schalt-/Erkennungssystem, das dem Stator zugeordnet ist. Der Stator umfasst drei unabhängige Sektoren wovon jeder eine Mehrzahl unabhängiger Statorspulen umfasst. Der Rotor ist an einer Flexplatte des Motors befestigt und die Statorsektoren sind an einem Gehäuse des Fahrzeugantriebsstrangs befestigt. Aus dem Dokument US 6 133 702 A ist eine hybride Fahrzeugantriebseinheit bekannt umfassend einen Motorgenerator.

Es ist somit eine Aufgabe der Erfindung, eine Triebstranganordnung mit einem Kurbelwellen-Startergenerator und einem Schwungrad zu ermöglichen, die Nachteile der aus dem Stand der Technik bekannten Triebstranganordnungen vermeidet. Es ist insbesondere eine Aufgabe der Erfindung, eine Triebstranganordnung zu ermöglichen, die eine schnellere und leichtere Demontage des Getriebes im Servicefall und eine bessere Werkzeugzugänglichkeit ermöglicht.

Diese Aufgaben werden durch einen Kurbelwellen-Startergenerator mit den Merkmalen des unabhängigen Anspruchs 1 gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die Erfindung umfasst die allgemeine technische Lehre, das KSG-Gehäuse und/oder den Stator eines Kurbelwellen-Startergenerators teilbar auszuführen. Das zwischen einem antriebsseitigen Schwungrad und einem abtriebsseitigen Getriebe anordenbare KSG-Gehäuse umfasst mindestens zwei Gehäuseteile, die lösbar zu einem einen Startergenerator umhausenden KSG-Gehäuse zusammensetzbar sind. Weiter vorzugsweise bilden die Gehäuseteile des KSG-Gehäuses im zusammengesetzten Zustand einen geschlossenen Ring.

In einem montierten Zustand, in dem das KSG-Gehäuse einen Rotor eines Startergenerators umhaust, ist zumindest ein Teil des KSG-Gehäuses abnehmbar. Durch Abnahme dieses zumindest einen Gehäuseteils im montierten Zustand des Kurbelwellen-Startergenerators am Getriebe kann die Werkzeugzugänglichkeit erhöht werden.

In einem bevorzugten Ausführungsbeispiel können die KSG-Gehäuseteile so ausgebildet sein, dass durch Abnahme wenigstens eines Teils des KSG-Gehäuses zumindest ein Teilbereich der Zähne des Rotors freigelegt wird. Dies kann beispielsweise dadurch realisiert werden, dass ein Gehäuseabschnitt, der einen Teilbereich der Zähne des Rotors umhaust, abnehmbar ausgebildet wird. Durch entsprechendes Verdrehen der Rotorstellung kann nach Abnahme des Gehäuseteils dann ein Schraubwerkzeug eingeführt werden und zwischen den Zähnen des Rotors durchgreifen, um die Schrauben, mit dem ein Adaptermittel an dem Getriebe verschraubt ist, zu lösen. Ein besonderer Vorzug der Erfindung liegt somit darin, dass keine zeitaufwändige Demontage des Kurbelwellenstartergenerators und der Schwungscheibe über eine rückseitige Öffnung im Schwungradgehäuse erforderlich ist, um das Getriebe zu demontieren.

Erfindungsgemäß sind die Gehäuseteile des KSG-Gehäuses so geformt, dass diese im zusammengesetzten Zustand einen geschlossenen Ring bilden, um eine möglichst kompakte Bauform zu ermöglichen.

Gemäß einem bevorzugten Ausführungsbeispiel ist das KSG-Gehäuse in gleich große Teile teilbar. Eine Möglichkeit der erfindungsgemäßen Realisierung sieht beispielsweise vor, dass das KSG-Gehäuse aus zwei gleich großen Gehäusehälften zusammensetzbar ist, beispielsweise aus zwei halbzylindermantelförmigen Gehäuseteilen, die zu einem hohlzylinderförmigen Gehäuse zusammensetzbar sind. Gemäß einer anderen Variante kann das Gehäuse aus vier Gehäusevierteln zusammensetzbar sein.

Es ist jedoch auch möglich, das KSG-Gehäuse so auszuführen, dass dieses in zwei oder mehr ungleich große Teile teilbar ist, d. h. aus zwei oder mehr ungleich großen Teilen zusammensetzbar ist. Hierbei kann die Größe wenigstens eines Teils ein Vielfaches der Größe eines anderen Teils aufweisen. Dies ist jedoch nicht unbedingt notwendig, sondern es kann auch eine beliebige Aufteilung der Größe der Teile gewählt werden.

Gemäß einer weiteren bevorzugten Ausführungsform der Erfindung ist der Stator des Kurbelwellen-Startergenerators, der von dem KSG-Gehäuse umhaust wird, ebenfalls teilbar ausgeführt und an der Innenseite des Gehäuses ortsfest angeordnet. Dies hat den Vorteil, dass nicht nur ein Gehäuseteil, sondern auch ein Statorteil im montierten Zustand abgenommen werden kann, um so die Zugänglichkeit zu Befestigungsmitteln, die im Inneren des KSG-Gehäuses angeordnet sind, zu erhöhen. Der Stator kann somit vorteilhafterweise auch als Teil des KSG-Gehäuses ausgebildet sein.

Bei einer vorteilhaften Variante dieser Ausgestaltungsform ist die teilbare Ausführung des Stators an die teilbare Ausführung des KSG-Gehäuses angepasst, derart, dass jedes Statorteil an der Innenseite höchstens eines Gehäuseteils des KSG-Gehäuses angeordnet ist. Ein Vorzug dieser Variante liegt somit darin, dass durch Abnahme eines entsprechenden Gehäuseteils in einem Schritt gleichzeitig ein entsprechendes Statorteil entfernt werden kann, um so schnell einen geeigneten Werkzeugzugang freizulegen. Ein Stator, der aus mehreren Einzelteilen zusammengesetzt ist, hat den weiteren Vorteil, dass durch die Segmentierung der Statorbleche der Verschnitt, der herkömmlicherweise bei der Fertigung der Blechringe für einen durchgehenden Stator entsteht, erheblich verringert wird.

Es ist weiterhin vorteilhaft, falls jedes Statorteil eines teilbar ausgeführten Stators eine eigene Stromleitungsherausführung zu einer zentralen Steuereinheit aufweist. Dies ermöglicht eine Synchronisation und Abstimmung der einzelnen Statorteile über die zentrale Steuereinheit. Gemäß einem weiteren Aspekt können die Stromleitungsherausführung bzw. die Stromleitungsherausführungen des Stators an einer Schnittstelle zweier KSG-Gehäuseteile angeordnet sein. Bei einer vorteilhaften Variante dieser Ausgestaltungsform sind an der Schnittstelle zweier benachbarter KSG-Gehäuseteile Nuten eingebracht, in die die aus dem Stator heraustretende Kabel der Stromleitungsherausführung eingelegt sind und von dem KSG-Gehäuse wasser- und schmutzdicht umschlossen und fixiert sind. Dadurch entfällt die Notwendigkeit, ein zusätzliches Kabelgehäuse vorzusehen, das bei herkömmlichen Kurbelwellen-Startergeneratoren zur Ausleitung der vom Stator ausgehenden Kabel zusätzlich am KSG-Gehäuse mit Kabelverschraubungen angebracht wird.

Eine weitere Möglichkeit der erfindungsgemäßen Realisierung sieht vor, dass das KSG-Gehäuse zum Abtransportieren der entstehenden Wärme des Stators offene und/oder geschlossene Kühlkanäle umfassen kann. Hierbei sind die Kühlkanäle in den einzelnen KSG-Gehäuseteilen vorzugsweise so angeordnet, dass die Kühlkanäle benachbarter Gehäuseteile fluidisch in Verbindung stehen, so dass ein Fluidübertritt von einem Gehäuseteil in das nächste ermöglicht wird. Bei einer vorteilhaften Variante dieser Ausgestaltungsform kann eine Kühlkanalwandung, insbesondere die eines offenen Kühlkanals, zumindest teilweise durch den Stator gebildet sein, um eine direkte und effektive Kühlwirkung zu erzielen. Hierbei kann der Stator ggfs. mit einer Beschichtung versehen sein, um Rostbildung zu vermeiden. Dies ist besonders vorteilhaft für den Fall, dass der Stator nicht von einem Gehäuse umhaust wird, was nachfolgend noch näher erläutert wird.

Weiterhin besteht im Rahmen der Erfindung die Möglichkeit, ein Rohrelement vorzusehen, das an einem ersten Endbereich in einen Kühlkanal eines KSG-Gehäuseteils eingebracht ist und mit einem zweiten, gegenüberliegenden Endbereich in einen Kühlkanal eines benachbarten KSG-Gehäuseteils eingebracht ist. Ein derartiges Rohrelement erfüllt vorteilhafterweise eine Doppelfunktion: Einerseits sichert das Rohrelement einen sicheren Fluidübertritt von einem Gehäuseteil in das angrenzende Gehäuseteil; andererseits kann das Rohrelement gleichzeitig zum Positionieren benachbarter Gehäuseteile zueinander genutzt werden, wenn diese nach einer Demontage wieder zusammengesetzt werden.

Das Rohrelement ist vorzugsweise an einem und/oder beiden seiner Endbereiche mit einer Fase versehen, um ein flüssiges Einbringen des Rohrelements bzw. Zusammenstecken der Gehäuseteile ohne Verkanten zu ermöglichen. Zusätzlich oder alternativ kann der Endbereich auch verjüngend, z. B. konisch, ausgeführt sein. Weiter vorzugsweise können ein oder beide Endbereiche mit einer Passung versehen sein. Gemäß einer weiteren Variante kann alternativ oder zusätzlich eine Dichtung, beispielsweise ein O-Ring, jeweils an beiden Endbereichen des Rohrelementes vorgesehen sein. Diese Maßnahmen stellen sicher, dass die Kühlkanäle benachbarter Gehäuseteile fluidisch möglichst dicht gekoppelt werden können.

Gemäß einem weiteren bevorzugten Ausführungsbeispiel ist ein Dichtelement zwischen dem KSG-Gehäuse und dem Stator angeordnet. Gemäß einer Variante dieser Ausgestaltungsform sind die vorgenannten Kühlkanäle in das Dichtelement eingearbeitet. Ebenso ist es vorteilhaft, die Stromleitungsherausführung am KSG-Gehäuse in das Dichtelement an einer Schnittstelle der KSG-Gehäuseteile zu integrieren.

Gemäß einem weiteren Aspekt ist das KSG-Gehäuse so ausgebildet, dass dieses zumindest teilweise in das Schwungradgehäuse integrierbar ist.

Um die Statorteile und Gehäuseteile des teilbar ausgeführten KSG-Gehäuses und teilbar ausgeführten Stators präzise und sicher miteinander zu verbinden, kann der Stator gemäß einer weiteren Variante wenigstens ein Formschlusselement aufweisen, das in Eingriff mit wenigstens einer entsprechenden Aussparung eines KSG-Gehäuseteils steht. Das Formschlusselement kann beispielsweise als Vorsprung, Nase oder Rippe ausgebildet sein, die an der Außenfläche des Stators in Richtung des KSG-Gehäuseteils absteht. Das Formschlusselement dient gleichzeitig zum Positionieren und als Verdrehsicherung.

Alternativ kann der Stator wenigstens eine Aufnahme aufweisen, die in Formschluss mit wenigstens einem Formschlusselement des KSG-Gehäuses gebracht werden kann, das an der Außenfläche des KSG-Gehäuses in Richtung des Stators absteht. Neben der formschlüssigen Verbindung kann der Stator mit dem KSG-Gehäuse zusätzlich oder alternativ kraftschlüssig verbunden sein. Vorteilhafterweise wird das Statorteil mit dem entsprechenden Gehäuseteil an dem Formschlusselement verschraubt.

Gemäß einer weiteren vorteilhaften Ausführungsform ist der Stator so ausgebildet, dass eine äußere Teilfläche des Stators aus dem KSG-Gehäuse in Axialrichtung antriebsseitig herausragt. Wenn die Breite des Stators somit größer als die des Gehäuses ist und im montierten Zustand in Richtung eines Schwungradgehäuses hervorragt, kann diese äußere herausragende Teilfläche als Zentrierung und Positionierelement zum Schwungradgehäuse verwendet werden. Hierbei ist das Schwungradgehäuse vorteilhafterweise so ausgebildet, dass dieses eine entsprechende Aufnahme bzw. Passung aufweist, in die die herausragende Statorfläche eingeschoben und zentriert werden kann. Dies ermöglicht eine schnelle und positionsgenaue Montage des Kurbelwellen-Startergenerators am Schwungrad.

Ein weiterer Aspekt der Erfindung betrifft einen Kurbelwellen-Startergenerator, umfassend ein KSG-Gehäuse nach einem der vorstehend beschriebenen Aspekte. Neben dem KSG-Gehäuse umfasst der Kurbelwellen-Startergenerator einen Stator, der wie vorstehend beschrieben, vorteilhafterweise auch als Teil des KSG-Gehäuses ausgebildet sein kann. Ferner umfasst der Kurbelwellen-Startergenerator einen Rotor, umfassend die Rotorzähne und einen Rotorträger zur Aufnahme der Rotorzähne und zur Kopplung des Rotors mit dem Schwungrad.

Gemäß einem weiteren Aspekt kann das technische Problem, eine Triebstranganordnung zu ermöglichen, die eine schnellere und leichtere Demontage des Getriebes im Servicefall und eine bessere Werkzeugzugänglichkeit ermöglicht, auch dadurch gelöst werden, dass ein Kurbelwellenstarter-Generator gehäuselos, jedoch mit teilbar ausgeführten Stator bereitgestellt wird. Mit anderen Worten wird ein Kurbelwellen-Startergenerator ohne Gehäuse vorgeschlagen, der einen teilbar ausgeführten Stator umfasst, der gleichzeitig eine äußere Grenzfläche, d.h. Außenfläche, des Kurbelwellen-Startergenerators bildet. Mit anderen Worten ist der teilbare Stator nicht von einem KSG-Gehäuse umhaust, sondern bildet selbst zumindest in radialer Richtung, d. h. senkrecht zur axialen Richtung der Kurbelwelle die Außenfläche des Kurbelwellenstarter-Generators. Der teilbar ausgeführte Stator bildet im montierten Zustand vorzugsweise einen geschlossenen Ring um den Rotor.

Im montierten Zustand, in dem der Stator den Rotor eines Startergenerators umhaust, ist zumindest ein Teil des Stators abnehmbar. Durch Abnahme dieses zumindest einen Statorteils bzw. Statorpakets am Getriebe kann die Werkzeugzugänglichkeit des Kurbelwellenstarter-Generators im Service-Fall erhöht werden.

Hierbei kann der Stator die zuvor beschriebenen Merkmale aufweisen, wie z. B. eine Teilbarkeit des Stators in gleich große Teile, z. B. in zwei Hälften oder in vier Viertel, die separaten Stromleitungsherausführungen etc., mit der Ausnahme, das der Stator in dieser Variante nicht an der Innenseite eines KSG-Gehäuses angeordnet ist. Zur Vermeidung von Wiederholungen wird hierzu auf die vorherige Beschreibung verwiesen.

Vorzugsweise umfasst der Stator eine äußere Schutzbeschichtung, die den Stator und den Kurbelwellen-Startergenerator vor Beschädigungen schützt. Hierfür können aus dem Stand der Technik bekannte Schutzbeschichtungen verwendet werden.

Ein weiterer Aspekt der Erfindung betrifft ein Fahrzeug, insbesondere ein Nutzfahrzeug, umfassend einen Startergenerator bzw. ein Startergenerator-Gehäuse gemäß einem der vorstehend beschriebenen Aspekte.

Weitere Einzelheiten und Vorteile der Erfindung werden im Folgenden unter Bezug auf die beigefügten Zeichnungen beschrieben. Es zeigen:
- Figur 1: eine Explosionsdarstellung einer Triebstranganordnung gemäß einem Ausführungsbeispiel;
- Figur 2: die perspektivische Explosionsdarstellung der Figur 1 in einer Seitenansicht;
- Figur 3: ein KSG-Gehäuseteil gemäß einem Ausführungsbeispiel;
- Figur 4: ein KSG-Gehäuse im zusammengesetzten Zustand und montiert an einem Schwungradgehäuse gemäß einem Ausführungsbeispiel;
- Figur 5A: ein KSG-Gehäuseteil gemäß einem Ausführungsbeispiel;
- Figur 5B: zwei benachbarte Dichtelemente und ein Rohrelement eines KSG-Gehäuses;
- Figur 6: ein Triebstrangmodul in einem vormontierten Zustand; und
- Figur 7: ein Triebstrangmodul mit abgenommenem KSG-Gehäuseteil gemäß einem Ausführungsbeispiel.

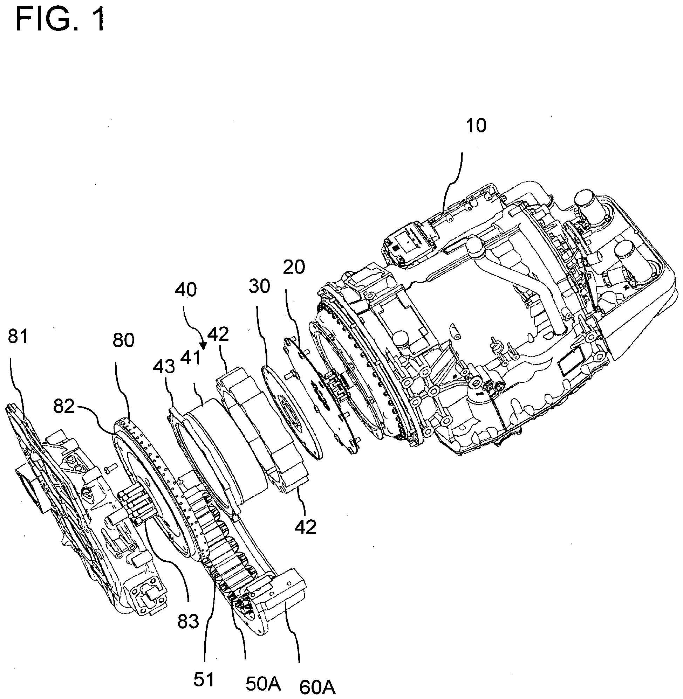

Figur 1 zeigt ein Triebstrangmodul mit einem KSG-Gehäuse gemäß einem Ausführungsbeispiel. Aus Illustrationsgründen ist in Figur 1 nur eine Gehäusehälfte 60A des KSG-Gehäuses gezeigt ist.

Das Triebstrangmodul umfasst ein mit der Kurbelwelle (nicht gezeigt) in Wirkverbindung stehendes Schwungrad 80, das in einem Schwungradgehäuse 81 gehaltert ist. Das Schwungrad 80 wird mittels Zylinderschrauben 83 an der Kurbelwelle befestigt. Das Schwungrad 80 umfasst ferner eine Auflagefläche 82 für einen Zahnkranz (nicht gezeigt).

Der Kurbelwellen-Startergenerator umfasst ein teilbar ausgeführtes KSG-Gehäuse, das aus zwei halbkreisbogenförmigen, baugleichen Gehäusehälften 60A, 60B gebildet ist, wobei in Figur 1 nur eine der Gehäusehälften 60A gezeigt ist.

Der Kurbelwellen-Startergenerator umfasst ferner einen Stator, der ebenfalls teilbar ausgeführt ist und aus zwei baugleichen Statorpaketen 50A und 50B zusammengesetzt wird, wobei in Figur 1 ebenfalls nur eines der Statorpakete 50A gezeigt ist. Das Statorpaket ist aus ineinandergreifenden und miteinander verschweißten Elektroblechen gebildet sowie den darin aufgenommenen Wicklungen des Stators. Die Statorhälfte 50A ist ortsfest am Innenumfang der zugeordneten KSG-Gehäusehälfte 60A angeordnet. Der Stator ist somit so ausgeführt, dass er an die teilbare Ausführung des KSG-Gehäuses angepasst ist. Im vorliegenden Ausführungsbeispiel ist somit jede Statorhälfte 50A bzw. 50B einer Gehäusehälfte 60A bzw. 60B zugeordnet und an deren Abmessungen angepasst, um an der Innenseite des zugeordneten Gehäuseteils 60A oder 60B des KSG-Gehäuses angeordnet werden zu können.

Der Kurbelwellen-Startergenerator umfasst ferner einen Rotor 40, mit einem Rotorträger 41, auf dem die Rotorzähne 42 umfangseitig befestigt sind. Der Rotorträger 41 verfügt an seinem antriebsseitigen Endbereich über eine Flanschfläche 43 mit Gewinde, über die der Rotorträger 41 an dem Schwungrad 80 drehfest befestigt werden kann.

Der Kurbelwellen-Startergenerator wird über eine Adapteranordnung 20, 30 an einem Getriebe, beispielsweise einem Automatikgetriebe 10, befestigt. Hierbei wird eine sogenannte Flexplatte 20 mit dem Getriebe 10 verschraubt.

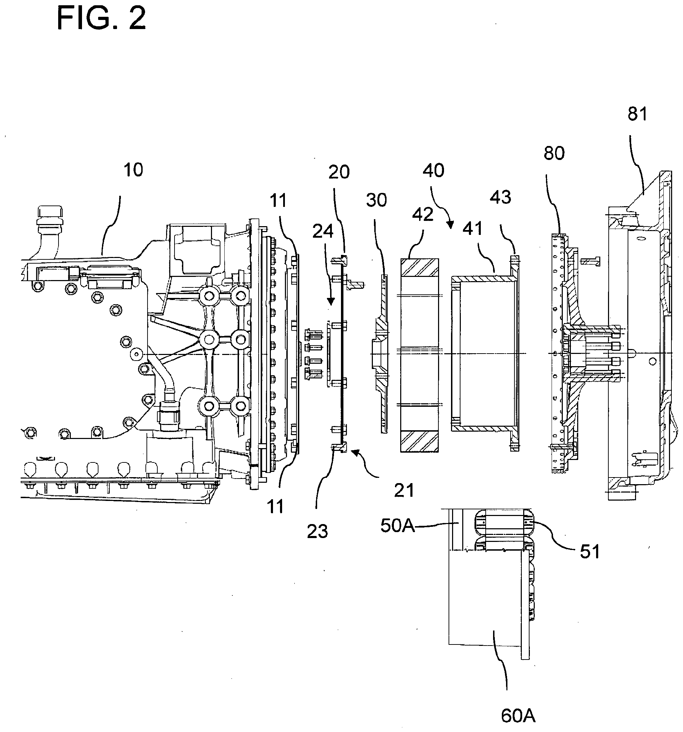

Wie in Figur 2 ersichtlich, wird die Flexplatte 20 durch eine Mehrzahl von Schraubbolzen 23 endseitig am Getriebe 10 angeschraubt. In einem radial äußeren Bereich weist die Flexplatte 20 hierzu mehrere axial verlaufende Durchgangsöffnungen auf. Den Durchgangsöffnungen zugeordnet sind an dem Getriebegehäuse mehrere in Umfangsrichtung verteilt angeordnete und an dem Gehäuse angeschweißte Muttern 11, welche die Gegenmitnahmeanordnung bilden. Ferner befinden sich am inneren Lochkreisdurchmesser 24 der Flexplatte weitere Durchgangsbohrungen zur Verschraubung der Flexplatte.

Derartige Flexplatten 20 (engl. *flex plates*) sind aus dem Stand der Technik bekannt und können einerseits ein Drehmoment von der Antriebsseite auf die Eingangsseite des Getriebes übertragen, andererseits axiale Verlagerungen der antriebsseitigen Komponenten derart abfangen, dass diese nicht auf die Eingangsseite des Drehmomentwandlers übertragen werden. Als weiteres Verbindungselement zwischen dem Kurbelwellen-Startergenerator bzw. dem Rotorträger 41 und der Flexplatte 20 ist eine Adapterplatte 30 vorgesehen, so dass der Kurbelwellen-Startergenerator an die für das Getriebe 10 vorgesehene Flexplatte 20 angepasst werden kann. Es wird jedoch betont, dass anstelle der Flexplatte auch beispielsweise eine starre scheibenförmige Platte verwendet werden kann oder andere Adapterelemente, beispielsweise tellerförmige Adapterelemente, um eine Adapteranordnung zwischen dem Kurbelwellen-Startergenerator und dem Getriebe 10 bereitzustellen.

Die hier gezeigten Bauteile der in den Figuren 1 und 2 gezeigten Triebstranganordnung mit Ausnahme des Kurbelwellen-Startergenerators sind an sich aus dem Stand der Technik bekannt und müssen hier nicht detaillierter beschrieben werden.

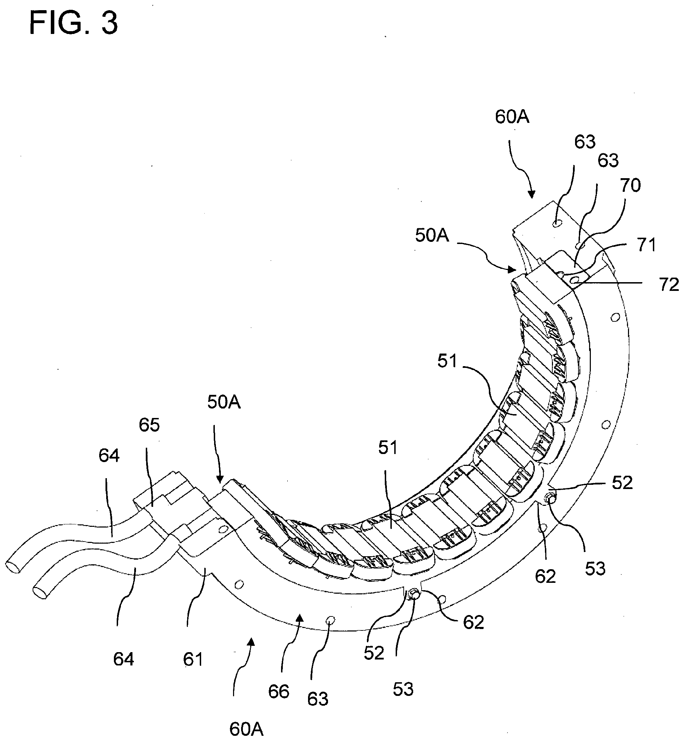

Ein Ausführungsbeispiel eines KSG-Gehäuses ist in Figur 3 in einer vergrößerten Ansicht ausschnittsweise gezeigt. Gemäß dem gezeigten Ausführungsbeispiel umfasst das KSG-Gehäuse zwei Gehäusehälften 60A und 60B, die im Wesentlichen baugleich ausgeführt sind, von denen in Figur 3 wiederum nur eine Gehäusehälfte 60A gezeigt ist. Die KSG-Gehäusehälfte sind an den Flanschflächen 61 miteinander verbunden. Die Flanschflächen weisen Durchgangsbohrungen 63 auf. Vorzugsweise bilden die beiden Teile 60A, 60B einen geschlossenen Ring, der möglichst punktsymmetrisch ausgebildet ist, damit der Betrieb und die auftretenden elektrischen Feldlinien durch den Rotor und den Stator möglichst homogen über die Drehbewegung verlaufen.

Die KSG-Gehäusehälfte 60A ist halbkreisbogenförmig ausgebildet und weist ein an die Abmessungen der KSG-Gehäusehälfte 60A angepasstes Statorteil 50A auf. Ein KSG-Gehäuse im Sinne dieser Erfindung kann auch den Stator des Kurbelwellen-Startergenerators umfassen.

Das Statorpaket 50A ist an der Innenseite des entsprechenden Gehäuseteils 60A ortsfest angeordnet. Hierzu weist die Statorhälfte 50A an seiner äußeren Außenfläche mehrere in Richtung der KSG-Gehäusehälfte 60A radial abstehende Vorsprünge 52 als Formschluss-elemente auf. Die KSG-Gehäusehälfte weist an den zugeordneten Stellen entsprechend ausgebildete Ausnehmungen 62 auf, um einen Formschluss zwischen Statorelement 50A und Gehäuseteil 60A auszubilden. Zusätzlich wird das Formschlusselement 52 über Schrauben 53 kraftschlüssig mit dem Gehäuseteil 60A verschraubt. An dem inneren Umfang des Statorteils 50A sind die Statorwicklungen 51 angeordnet. Gemäß einer weiteren Variante kann der Stator umgossen sein.

Jedes Statorteil 50A, 50B weist eine eigene Stromleitungsherausführung bzw. Verkabelung 64 zu einer zentralen Steuereinheit (nicht gezeigt) auf. Die Stromleitungsherausführung 64 des Stators ist an einer Schnittstelle 61 zweier benachbarter Gehäuseteile 60A, 60B angeordnet. Hierbei sind an der Schnittstelle 61 Nuten 65 vorgesehen, in die die aus dem Stator heraustretenden Kabel der Stromleitungsherausführung 64 eingelegt sind und im zusammengebauten Zustand des KSG-Gehäuses vom KSG-Gehäuse wasser- und schmutzdicht umschlossen und fixiert sind. Dadurch entfällt die Notwendigkeit für ein zusätzliches Kabelgehäuse.

Ferner umfasst das KSG-Gehäuse zum Abtransportieren der entstehenden Wärme des Stators 50A, 50B offene 71 oder geschlossene 72 Kühlkanäle, wobei die Kühlkanäle 71, 72 in den einzelnen KSG-Gehäusehälften 60A, 60B so angeordnet sind, dass die Kühlkanäle 71, 72 benachbarter Gehäuseteile fluidisch in Verbindung stehen. Wie in Figur 3 ferner ersichtlich, ist eine Kühlkanalwandung des offenen Kühlkanals 71 zumindest teilweise durch den Stator 50A gebildet.

An der seitlichen Flanschfläche 66 der KSG-Gehäusehälfte 60A, 60B zum Schwundradgehäuse 81 sind zueinander beabstandete Durchgangsbohrungen 63 vorgesehen, um das KSG-Gehäuse mit dem Schwungradgehäuse verschrauben zu können.

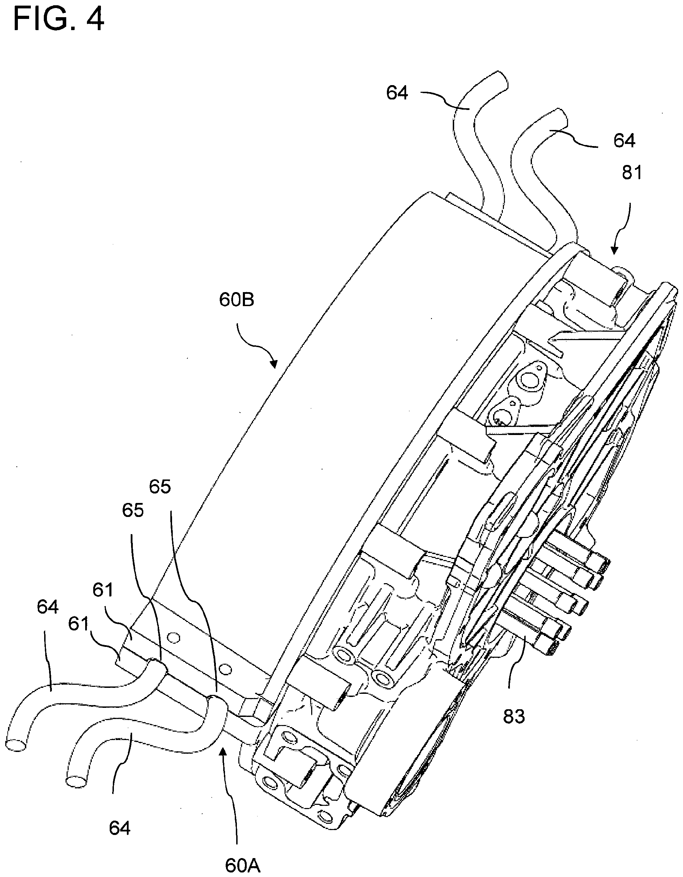

Figur 4 zeigt die beiden KSG-Gehäusehälften 60A und 60B im zusammengebauten Zustand, und in einem Zustand, in dem das KSG-Gehäuse 60A, 60B mit dem Schwungradgehäuse 81 verschraubt ist. Figur 4 illustriert ferner, wie die an der Schnittstelle der beiden Gehäusehälften angeordneten Flanschflächen 61 mittels der darin eingearbeiteten Nuten 65 die heraustretenden Statorkabel 64 umschließen.

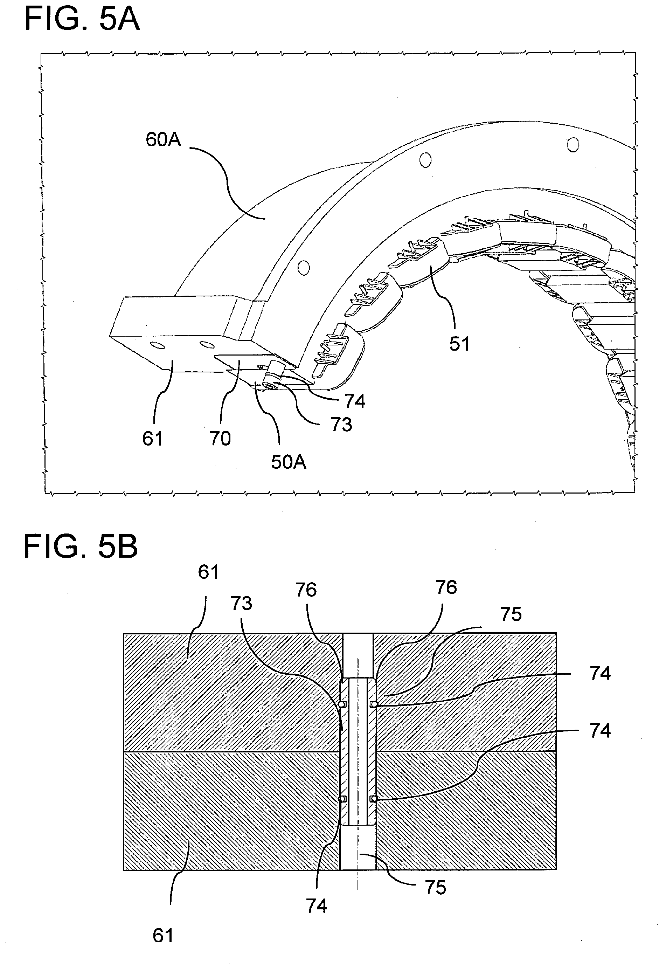

In den Figuren 5A und 5B ist eine weitere vorteilhafte Ausführungsvariante des KSG-Gehäuses gezeigt. Die Kühlkanäle 71, 72, über die entstehende Wärme des Stators abtransportiert werden kann, sind in das Dichtelement 70 eingearbeitet. Die Kühlkanäle 71, 72 in den einzelnen KSG-Gehäuseteilen sind so angeordnet, dass die Kühlkanäle benachbarter Gehäuseteile 60A, 60B im zusammengebauten Zustand fluidisch miteinander gekoppelt sind.

Um die Kühlkanäle benachbarter Gehäuseteile miteinander zu verbinden, ist ein Rohrelement 73 vorgesehen, das in einen Kühlkanal 72 an einem ersten Endbereich des Dichtelements 70 des KSG-Gehäuseteils eingesteckt ist und mit einem zweiten gegenüberliegenden Endbereich in den entsprechenden Kühlkanal 72 im Dichtelement 70 des benachbarten KSG-Gehäuseteils eingesteckt werden kann. Das Rohrelement 73 weist hierzu jeweils Dichtringe 74 an den beiden Endbereichen auf, die verhindern, dass das Fluid an der Schnittstelle 61 austreten kann. Bei Verwendung des Rohrelements 73 kann ein dichter Fluidübetritt zwischen benachbarten Gehäusehälften auch ohne Dichtelement 70 realisiert werden, das weggelassen werden kann.

Wie in Figur 5B weiter gezeigt, ist in den Endbereichen des Rohrelements 73 eine Fase 76 in Form einer abgeschrägten Fläche an der äußeren Rohrkante vorgesehen. Zusätzlich ist das Rohrelement 73 mit einer Passung im oberen und unteren Endbereich versehen. Dies bedeutet, dass der Durchmesser dort genauer gefertigt ist als davor, damit die Position der beiden KSG-Gehäusehälften zueinander genauer bestimmt werden kann. Das abdichtende Rohrelement 73 dient somit gleichzeitig zur Positionierung der beiden Gehäusehälften (in Figur 5B sind nur die beiden Flanschflächen 61 der oberen und unteren Gehäusehälfte gezeigt).

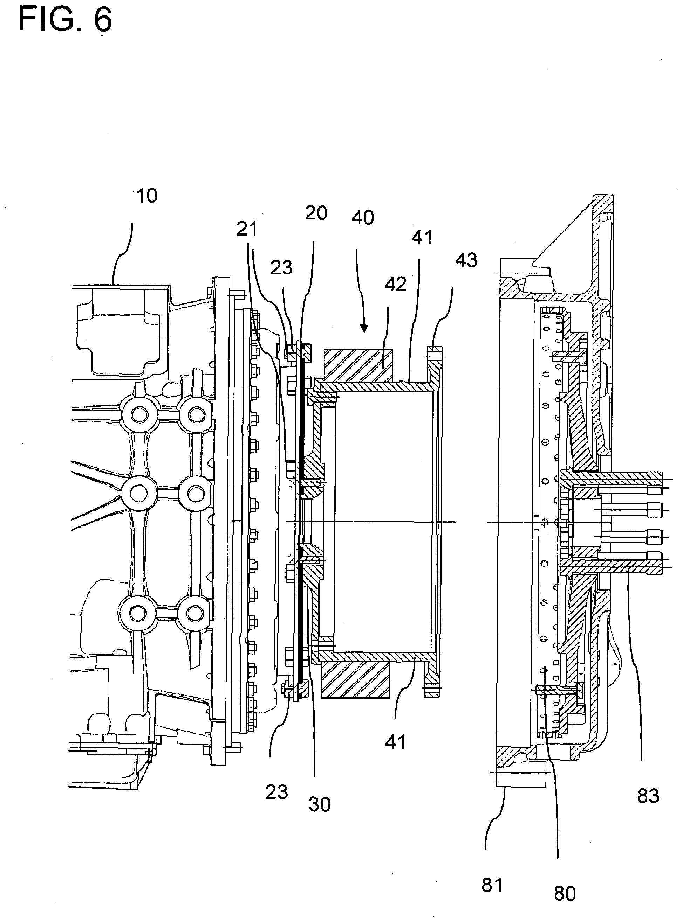

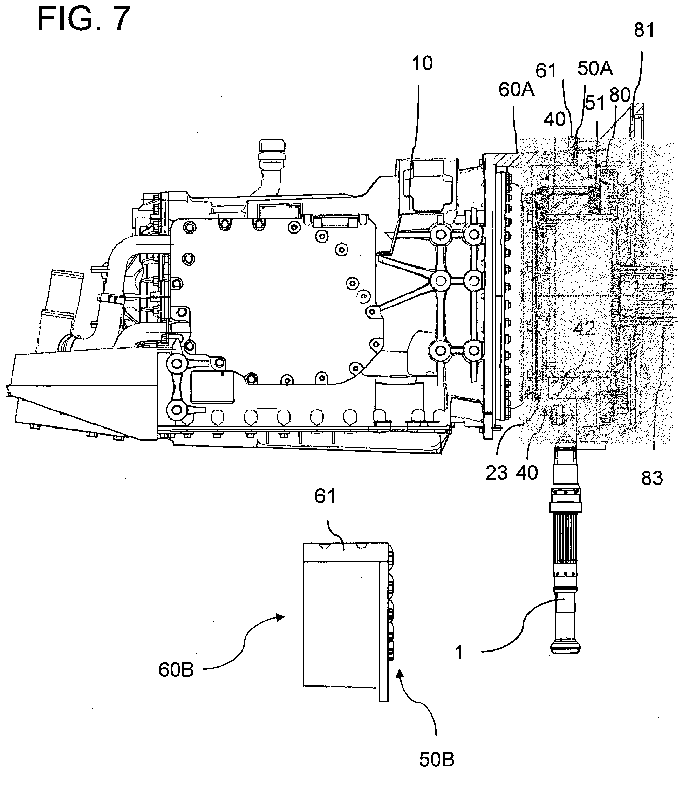

Die Teilbarkeit des KSG-Gehäuses ermöglicht sowohl eine einfachere Montage als auch eine einfachere Demontage der Getriebeanordnung, was nachfolgend anhand der Figuren 6 und 7 erläutert wird.

Figur 6 zeigt einen teilmontierten Zustand der Getriebeanordnung. Bei der Vormontage wird das geteilte Statorpaket 50A, 50B mit dem geteilten KSG-Gehäuse 60A, 60B verbunden, beispielsweise durch Verschraubung, Pressung, Formschluss, Umgießen des Statorpakets, etc. und liegt als separate Baugruppe vor. Bei dem Montagevorgang wird anschließend zunächst lediglich der Rotor 40 mit dem Rotorträger 41 und den darauf befestigten Rotorzahnkranz 42 über die Adapterplatte 30 mit der Flexplatte 20 verschraubt.

Die Flexplatte 20 ist über einen Adapter am inneren Lochkreisdurchmesser schwungradseitig verbunden. Die Flexplatte 20 wird über ihren getriebeseitig äußeren Lochkreisdurchmesser 21 mit dem Getriebe 10 verschraubt. Nachdem sämtliche Schrauben angezogen sind - hierzu ist ein zeitweises Verdrehen der Flexplatte-Schwungrad-Verbindung notwendig -, wird das Gehäuse mit dem Statorpaketen aufgesetzt und geschlossen.

Da bei diesem Montagevorgang durch die Teilbarkeit des Gehäuses sowohl die Gehäuseteile 60A, 60B und die Statorteile 50A, 50B erst zu einem späteren Zeitpunkt montiert werden können, ist die Zugänglichkeit zur axialen Verschraubung am äußeren Lochkreisdurchmesser 21 mit einem Schraubwerkzeug verbessert. Nachdem sämtliche Schrauben 23 am äußeren Lochkreisdurchmesser 21 angezogen sind - hierzu ist ein teilweises Verdrehen der Flexplatte an der Adapterschwungverbindung notwendig -, wird die ausstehende KSG-Gehäusebaugruppe montiert und zu einem geschlossenen Gehäusering verbunden (nicht gezeigt). Die KSG-Gehäusesegmente 60A, 60B umschließen den Rotor 40 und werden über die Flanschflächen 61 miteinander verbunden.

Figur 7 illustriert den Vorteil der Erfindung bei einem Servicefall, beispielsweise bei einem Getriebeschaden, bei dem das Getriebe ausgewechselt werden muss. Um die Handhabung der Schrauben, insbesondere die Anschraubung der äußeren Flexplattenschrauben 23 an das Getriebe 10, zu gewährleisten, wird in einem ersten Schritt von der montierten Triebstranganordnung zumindest eines der Gehäuseteile 60B durch Lösung der Verschraubung an den Flanschflächen 61 entfernt. Dies ermöglicht die Zugänglichkeit zur Flexplatten-Getriebe-Verschraubung am äußeren Lochkreisdurchmesser 21 der Flexplatten. Figur 7 zeigt, dass eine Gehäusehälfte 60B demontiert ist, während die andere Gehäusehälfte 60A den Rotor 40 noch hälftig umhaust. Durch das Entfernen der Gehäusehälfte 60B kann ein Schraubwerkzeug 1, gegebenenfalls durch Verdrehung des Rotors 40, in den Zwischenraum der Zähne 42 eingreifen und so die Schrauben 23 am äußeren Lochkreisdurchmesser 21 der Flexplatte 20 erreichen. Dadurch kann das Getriebe 20 bei montiertem Rotor 40 und Schwungrad 80 demontiert und auf eine umständliche Demontage über eine rückseitige Öffnung im Schwungradgehäuse 81 verzichtet werden. Je nach Auslegung der Statorbreite kann aufgrund des eingeschränkten einzelnen Bauraums gegebenenfalls zusätzlich eine Teilung des Schwungradgehäuses 81 vorgenommen werden, um die Zugänglichkeit weiter zu verbessern.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Insbesondere kann die Teilbarkeit des Gehäuses und des Stators von den beschriebenen Ausführungsvarianten abweichen und an den verfügbaren Bauraum des speziellen Antriebsstranges angepasst werden, um eine optimale Werkzeugzugänglichkeit zu gewährleisten. Ferner kann das erfindungsgemäße KSG-Gehäuse bei einer Vielzahl von konstruktiv unterschiedlichen Antriebssträngen eingesetzt werden. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

**Bezugszeichenliste**

| | | | |
|---|---|---|---|
| 1 | Schraubwerkzeug | 81 | Schwungradgehäuse |
| 10 | Getriebe | 82 | Aufnahme |
| 11 | Mutter | 83 | Passstifte |
| 20 | Flexplatte | | |
| 21 | Äußerer Lochkreisdurchmesser | | |
| 22 | Loch | | |
| 23 | Schraube | | |
| 24 | Innerer Lochkreisdurchmesser | | |
| 30 | Adapter | | |
| 40 | Rotor | | |
| 41 | Rotorträger | | |
| 42 | Rotorzähne | | |
| 43 | Steg | | |
| 50A, 50B | Statorteile | | |
| 51 | Statorwicklungen | | |
| 52 | Formschlusselement | | |
| 53 | Schraube | | |
| 60A, 60B | KSG-Gehäusehälfte | | |
| 61 | Flanschfläche | | |
| 62 | Aussparung | | |
| 63 | Durchgangsbohrung | | |
| 64 | Verkabelung | | |
| 65 | Nut | | |
| 66 | Flanschfläche | | |
| 70 | Dichtelement | | |
| 71 | Offener Kühlkanal | | |
| 72 | Geschlossener Kühlkanal | | |
| 73 | Rohrelement | | |
| 74 | Dichtung | | |
| 75 | Passung | | |
| 76 | Fase | | |
| 80 | Schwungrad | | |

## Patentansprüche

1. Kurbelwellen-Startergenerator, mit einem Kurbelwellen-Startergenerator (KSG)-Gehäuse (60A, 60B), wobei das KSG-Gehäuse (60A, 60B) in einem montierten Zustand einen Rotor (40) des Startergenerators (40) umhaust, wobei das KSG-Gehäuse (60A, 60B) teilbar ausgeführt ist, **dadurch gekennzeichnet, dass** das KSG-Gehäuse (60A, 60B) zwei oder mehr Gehäuseteile umfasst, die so geformt sind, dass die Gehäuseteile im zusammengesetzten Zustand einen geschlossenen Ring bilden, wobei zumindest ein Teil des KSG-Gehäuses (60B) abnehmbar ist, so dass das zumindest eine abnehmbare Teil des KSG-Gehäuses von einer montierten Triebstranganordnung demontiert werden kann, während zumindest ein anderer Gehäuseteil (60A, 60B) den Rotor (40) noch umhaust.

2. Kurbelwellen-Startergenerator nach Anspruch 1, **dadurch gekennzeichnet, dass** in dem montierten Zustand zumindest ein Teil des KSG-Gehäuses (60B) abnehmbar ist, um einen Teilbereich der Zähne (42) des Rotors (40) freizulegen.

3. Kurbelwellen-Startergenerator nach Anspruch 1 oder 2, **dadurch gekennzeichnet,**
(a) **dass** das KSG-Gehäuse (60A, 60B) in gleich große Teile teilbar ist; und/oder
(b) **dass** das KSG-Gehäuse (60A, 60B) aus zwei Gehäusehälften (60A, 60B) oder aus vier Gehäusevierteln zusammensetzbar ist.

4. Kurbelwellen-Startergenerator nach Anspruch 1 oder 2, **dadurch gekennzeichnet, dass** das KSG-Gehäuse in wenigstens zwei ungleich große Teile teilbar ist, wobei eine Größe wenigstens eines Teils ein Vielfaches der Größe eines anderen Teils aufweist.

5. Kurbelwellen-Startergenerator nach einem der vorhergehenden Ansprüche, **gekennzeichnet durch** einen teilbar ausgeführten Stator(50A, 50B), der an der Innenseite des KSG-Gehäuses (60A, 60B) ortsfest angeordnet ist.

6. Kurbelwellen-Startergenerator nach Anspruch 5, **dadurch gekennzeichnet, dass** die teilbare Ausführung des Stators (50A, 50B) an die teilbare Ausführung des KSG-Gehäuses (60A, 60B) angepasst ist, derart, dass jedes Statorteil (50A, 50B) an der Innenseite höchstens eines Gehäuseteils (60A, 60B) des KSG-Gehäuses angeordnet ist.

7. Kurbelwellen-Startergenerator nach einem der Ansprüche 5 oder 6, **dadurch gekennzeichnet, dass** jedes Statorteil (50A, 50B) eine eigene Stromleitungsherausführung zu einer zentralen Steuereinheit aufweist.

8. Kurbelwellen-Startergenerator nach einem der Ansprüche 5 bis 7, **dadurch gekennzeichnet,**
(a) **dass** eine Stromleitungsherausführung (64) des Stators an einer Schnittstelle (61) zweier KSG-Gehäuseteile (60A, 60B) angeordnet ist; und/oder
(b) **dass** an einer Schnittstelle (61) zweier benachbarter KSG-Gehäuseteile (60A, 60B) Nuten (65) eingebracht sind, in die aus dem Stator austretende Kabel (64) der Stromleitungsherausführung eingelegt sind und von dem KSG-Gehäuse wasser- und schmutzdicht umschlossen und fixiert sind.

9. Kurbelwellen-Startergenerator nach einem der vorhergehenden Ansprüche, **dadurch gekennzeichnet,**
(a) **dass** das KSG-Gehäuse zum Abtransportieren der entstehenden Wärme des Stators (50) offene (71) und/oder geschlossene (72) Kühlkanäle umfasst, wobei die Kühlkanäle (71, 72) in den einzelnen KSG-Gehäuseteilen (60A, 60B) so angeordnet sind, dass die Kühlkanäle (71, 72) benachbarter Gehäuseteile (60A, 60B) fluidisch in Verbindung stehen; und/oder
(b) **dass** eine Kühlkanalwandung zumindest teilweise durch den Stator gebildet ist, wobei die entsprechende Stelle des Stators vorzugsweise mit einem Rostschutz beschichtet ist.

10. Kurbelwellen-Startergenerator nach Anspruch 9, **dadurch gekennzeichnet, dass** ein Rohrelement (73) vorgesehen ist, das an einem ersten Endbereich in einen Kühlkanal (72) eines KSG-Gehäuseteils (60A) eingebracht ist und mit einem zweiten, gegenüberliegenden Endbereich in einen Kühlkanal (72) eines benachbarten KSG-Gehäuseteils (60B) eingebracht ist.

11. Kurbelwellen-Startergenerator nach Anspruch 10, **dadurch gekennzeichnet, dass** das Rohrelement (73) an wenigstens einem der Endbereiche mit einer Fase (76), einer konischen Ausführung, einer Passung (75) und/oder einer Dichtung (74) versehen ist.

12. Kurbelwellen-Startergenerator nach einem der vorhergehenden Ansprüche, **gekennzeichnet durch** ein Dichtelement (70), das zwischen dem KSG-Gehäuse (60) und dem Stator (50) angeordnet ist.

13. Kurbelwellen-Startergenerator nach Anspruch 12, **dadurch gekennzeichnet,**
(a) **dass** die Kühlkanäle (71, 72) in das Dichtelement eingearbeitet sind; und/oder
(b) **dass** die Stromleitungsherausführung am KSG-Gehäuse in das Dichtelement (70) an einer Schnittstelle (61) der KSG-Gehäuseteile (60A, 60B) integriert ist.

14. Kurbelwellen-Startergenerator nach einem der vorhergehenden Ansprüche 5 bis 13, **dadurch gekennzeichnet,**
(a) **dass** der Stator (50) ein Formschlusselement (52) umfasst, das in Eingriff mit einer entsprechenden Aussparung (62) eines KSG-Gehäuseteils (60A, 60B) steht; und/oder
(b) **dass** eine äußere Teilfläche des Stators aus dem KSG-Gehäuse herausragt.

## Claims

1. Crankshaft starter generator having a crankshaft starter generator (CSG) housing (60A, 60B), wherein the CSG housing (60A, 60B) in a fitted state, accommodates a rotor (40) of the starter generator (40), wherein the CSG housing (60A, 60B) is designed so as to be divisible, **characterized in that** the CSG housing (60A, 60B) comprises two or more housing parts which are formed in such a manner that the housing parts, in the assembled state, form a closed ring, wherein at least a part of the CSG housing (60B) can be removed so that the at least one removable part of the CSG housing can be removed from a fitted drivetrain arrangement while at least one other housing part (60A, 60B) still accommodates the rotor (40).

2. Crankshaft starter generator according to Claim 1, **characterized in that**, in the fitted state, at least a part of the CSG housing (60B) can be removed in order to expose a partial region of the teeth (42) of the rotor (40).

3. Crankshaft starter generator according to Claim 1 or 2, **characterized**
(a) **in that** the CSG housing (60A, 60B) is divisible into parts of equal size; and/or
(b) **in that** the CSG housing (60A, 60B) can be composed of two housing halves (60A, 60B) or of four housing quarters.

4. Crankshaft starter generator according to Claim 1 or 2, **characterized in that** the CSG housing is divisible into at least two parts of unequal size, wherein a size of at least one part is a multiple of the size of another part.

5. Crankshaft starter generator according to one of the preceding claims, **characterized by** a stator (50A, 50B) which is designed so as to be divisible and is arranged in a positionally fixed manner on the inside of the CSG housing (60A, 60B).

6. Crankshaft starter generator according to Claim 5, **characterized in that** the divisible design of the stator (50A, 50B) is matched to the divisible design of the CSG housing (60A, 60B) in such a manner that each stator part (50A, 50B) is arranged on the inside of at most one housing part (60A, 60B) of the CSG housing.

7. Crankshaft starter generator according to either of Claims 5 and 6, **characterized in that** each stator part (50A, 50B) has a dedicated power line leadthrough to a central control unit.

8. Crankshaft starter generator according to one of Claims 5 to 7, **characterized**
(a) **in that** a power line leadthrough (64) of the stator is arranged at an intersection (61) of two CSG housing parts (60A, 60B); and/or
(b) **in that** grooves (65), into which power line leadthrough cables (64) emerging from the stator are placed and are surrounded and fixed in a watertight and dirttight manner by the CSG housing, are introduced at an intersection (61) of two adjacent CSG housing parts (60A, 60B).

9. Crankshaft starter generator according to one of the preceding claims, **characterized**
(a) **in that** the CSG housing comprises open cooling ducts (71) and/or closed cooling ducts (72) for transporting away the heat arising from the stator (50), wherein the cooling ducts (71, 72) are arranged in the individual CSG housing parts (60A, 60B) in such a manner that the cooling ducts (71, 72) of adjacent housing parts (60A, 60B) are fluidically connected; and/or
(b) **in that** a cooling duct wall is at least partially formed by the stator, wherein the corresponding point of the stator is preferably coated with a rust prevention means.

10. Crankshaft starter generator according to Claim 9, **characterized in that** a tube element (73) is provided, which tube element is introduced at a first end region into a cooling duct (72) of a CSG housing part (60A) and is introduced by a second, opposite end region into a cooling duct (72) of an adjacent CSG housing part (60B) .

11. Crankshaft starter generator according to Claim 10, **characterized in that** the tube element (73) is provided with a bevel (76), a conical design, a fit (75) and/or a seal (74) at at least one of the end regions.

12. Crankshaft starter generator according to one of the preceding claims, **characterized by** a sealing element (70) which is arranged between the CSG housing (60) and the stator (50).

13. Crankshaft starter generator according to Claim 12, **characterized**
(a) **in that** the cooling ducts (71, 72) are incorporated into the sealing element; and/or
(b) **in that** the power line leadthrough on the CSG housing is integrated into the sealing element (70) at an intersection (61) of the CSG housing parts (60A, 60B) .

14. Crankshaft starter generator according to one of the preceding Claims 5 to 13, **characterized**
(a) **in that** the stator (50) comprises a form-fitting element (52) which is in engagement with a corresponding recess (62) of a CSG housing part (60A, 60B); and/or
(b) **in that** an outer partial surface of the stator projects out of the CSG housing.

## Revendications

1. Générateur de démarreur de vilebrequin, comprenant un boîtier (60A, 60B) de générateur de démarreur de vilebrequin (KSG), le boîtier de KSG (60A, 60B) logeant un rotor (40) du générateur de démarreur (40) dans un état monté, le boîtier de KSG (60A, 60B) étant réalisé de manière divisible, **caractérisé en ce que** le boîtier de KSG (60A, 60B) comporte deux ou plus de deux parties de boîtier qui sont formées de telle sorte que les parties de boîtier forment un anneau fermé à l'état assemblé, au moins une partie du boîtier de KSG (60B) étant amovible, de telle sorte qu'au moins une partie amovible du boîtier de KSG puisse être démontée d'un ensemble de chaîne cinématique monté, tandis qu'au moins une autre partie de boîtier (60A, 60B) loge encore le rotor (40).

2. Générateur de démarreur de vilebrequin selon la revendication 1, **caractérisé en ce qu'**à l'état monté, au moins une partie du boîtier de KSG (60B) est amovible, afin d'exposer une région partielle des dents (42) du rotor (40).

3. Générateur de démarreur de vilebrequin selon la revendication 1 ou 2, **caractérisé en ce que**
(a) le boîtier de KSG (60A, 60B) est divisible en parties de même taille ; et/ou
(b) le boîtier de KSG (60A, 60B) peut être assemblé à partir de deux moitiés de boîtier (60A, 60B) ou à partir de quatre quarts de boîtier.

4. Générateur de démarreur de vilebrequin selon la revendication 1 ou 2, **caractérisé en ce que** le boîtier de KSG est divisible en au moins deux parties de tailles différentes, une taille d'au moins une partie étant un multiple de la taille d'une autre partie.

5. Générateur de démarreur de vilebrequin selon l'une des revendications précédentes, **caractérisé par** un stator (50A, 50B) réalisé de manière divisible, lequel est disposé fixement sur le côté intérieur du boîtier de KSG (60A, 60B).

6. Générateur de démarreur de vilebrequin selon la revendication 5, **caractérisé en ce que** la conception divisible du stator (50A, 50B) est adaptée à la conception divisible du boîtier de KSG (60A, 60B), de telle sorte que chaque partie de stator (50A, 50B) soit disposée sur le côté intérieur d'au plus une partie (60A, 60B) du boîtier de KSG.

7. Générateur de démarreur de vilebrequin selon la revendication 5 ou 6, **caractérisé en ce que** chaque partie de stator (50A, 50B) comprend une traversée de ligne électrique propre vers une unité de commande centrale.

8. Générateur de démarreur de vilebrequin selon l'une des revendications 5 à 7, **caractérisé en ce que**
(a) une traversée de ligne électrique (64) du stator est disposée au niveau d'une interface (61) de deux parties de boîtier de KSG (60A, 60B) ; et/ou
(b) au niveau d'une interface (61) de deux parties de boîtier de KSG (60A, 60B) adjacentes, des rainures (65) sont ménagées, dans lesquelles des câbles (64), sortant du stator, de la traversée de ligne électrique sont disposés et sont entourés par le boîtier de KSG de manière étanche à l'eau et aux saletés et fixés.

9. Générateur de démarreur de vilebrequin selon l'une des revendications précédentes, **caractérisé en ce que**
(a) le boîtier de KSG comporte des canaux de refroidissement ouverts (71) et/ou fermés (72) pour l'évacuation de la chaleur résultante du stator (50), les canaux de refroidissement (71, 72) étant disposés dans les parties individuelles de boîtier de KSG (60A, 60B) de telle sorte que les canaux de refroidissement (71, 72) de parties de boîtier (60A, 60B) adjacentes soient en liaison fluidique ; et/ou
(b) une paroi de canal de refroidissement est formée au moins partiellement à travers le stator, l'emplacement correspondant du stator étant de préférence revêtu d'une protection contre la rouille.

10. Générateur de démarreur de vilebrequin selon la revendication 9, **caractérisé en ce qu'**un élément tubulaire (73) est prévu, lequel est, au niveau d'une première région d'extrémité, introduit dans un canal de refroidissement (72) d'une partie de boîtier de KSG (60A) et, par une deuxième région d'extrémité opposée, inséré dans un canal de refroidissement (72) d'une partie de boîtier de KSG (60B) adjacente.

11. Générateur de démarreur de vilebrequin selon la revendication 10, **caractérisé en ce que** l'élément tubulaire (73) est, au niveau d'au moins l'une des régions d'extrémité, doté d'un biseau (76), d'une conception conique, d'un ajustement (75) et/ou d'un joint d'étanchéité (74).

12. Générateur de démarreur de vilebrequin selon l'une des revendications précédentes, **caractérisé par** un élément d'étanchéité (70) qui est disposé entre le boîtier de KSG (60) et le stator (50).

13. Générateur de démarreur de vilebrequin selon la revendication 12, **caractérisé en ce que**
(a) les canaux de refroidissement (71, 72) sont ménagés dans l'élément d'étanchéité ; et/ou
(b) la traversée de ligne électrique au niveau du boîtier de KSG est intégrée dans l'élément d'étanchéité (70) au niveau d'une interface (61) des parties de boîtier de KSG (60A, 60B).

14. Générateur de démarreur de vilebrequin selon l'une des revendications précédentes 5 à 13, **caractérisé en ce que**
(a) le stator (50) comporte un élément de complémentarité de forme (52) qui est en prise avec un évidement correspondant (62) d'une partie de boîtier de KSG (60A, 60B) ; et/ou
(b) une surface partielle extérieure fait saillie à partir du boîtier de KSG.
